# EUROPÄISCHE PATENTSCHRIFT

(11) **EP 0 800 622 B1**
(45) Veröffentlichungstag und Bekanntmachung des Hinweises auf die Patenterteilung: **13.02.2002**
(21) Anmeldenummer: 95941012.7
(22) Anmeldetag: 24.11.1995
(51) Int. Cl.: F04C 29/00, F04C 29/04, C02F 1/461

(54) **VERDICHTERANLAGE**
COMPRESSOR INSTALLATION
INSTALLATION DE COMPRESSION

(30) Priorität: 29.12.1994 DE 4447097
(43) Veröffentlichungstag der Anmeldung: 15.10.1997
(73) Patentinhaber: Kirsten, Günter, 08451 Crimmitschau (DE)
(72) Erfinder: Kirsten, Günter, 08451 Crimmitschau (DE)
(74) Vertreter: Selting, Günther, Dipl.-Ing.
(86) Internationale Anmeldenummer: EP9504637
(87) Internationale Veröffentlichungsnummer: WO9621109

(56) Entgegenhaltungen:
- EP-A- 0 258 255
- EP-A- 0 389 036
- EP-A- 0 467 831
- EP-A- 0 499 732
- CH-A- 218 967
- GB-A- 191 013 825

## Beschreibung

Die Erfindung betrifft eine Verdichteranlage mit einem einspritzgekühlten Verdichter und ein Verfahren zum Verdichten eines Gases in einer Verdichteranlage.

Verdichter und insbesondere Schraubenverdichter werden dazu verwendet, gasförmige Medien, insbesondere aus der Atmosphäre angesaugte Luft zu verdichten. Im allgemeinen wird angestrebt, das Gas auf einem möglichst hohen Druckniveau mit einer moderaten Temperatur und verunreinigungsfrei bereitzustellen.

Um das verdichtete Gas am Druckausgang eines Schraubenverdichters mit einer geringen Temperatur zur Verfügung stellen zu können, sind bei Schraubenverdichtern verschiedene Flüssigkeitseinspritzungen entwickelt worden. Als Kühlmittel wird bei solchen einspritzgekühlten Schraubenverdichtern Öl, Wasser oder eine chemische Kühlmischung verwendet.

Es ist bekannt, daß eine niedrige Gasauslastemperatur bei Rotationsverdichtern im allgemeinen mit einem guten Wirkungsgrad verbunden ist. Es ist jedoch heute nicht mehr akzeptabel, einen guten energetischen Wirkungsgrad durch eine Belastung der Umwelt durch gefährliche Substanzen oder einen übermäßigen Wasserverbrauch zu erkaufen.

CH-A-564 153 beschreibt einen Schraubenverdichter mit einem druckgeschlossenen Kühlkreislauf, in welchem Öl zirkuliert. Aus CH-A-564 153 ist bekannt, daß die Größe von Öltröpfchen und deren Flugbahn einen wesentlichen Einfluß auf die Kühlwirkung hat. Es ist ferner bekannt, daß; eine feine Vernebelung von Öltröpfchen eine gute Kühlung bewirkt, andererseits aber kleinste Öltröpfchen eine spätere Ölabscheidung erschweren und damit zu Verunreinigungen im Druckgas führen. Das zur Schmierung und Kühlung vorgesehene Schmieröl wird in den Schraubenverdichter eingespritzt und begrenzt die Erwärmung des zu verdichtenden Gases. Zusammen mit dem verdichteten Gas wird es zu einem Absetzbehälter geleitet, in dem sich das in dem Druckgas mitgeführte Schmieröl absetzt. Aus dem Absetzbehälter wird das Druckgas über einen Kühler aus der Verdichteranlage abgeführt. Das Schmieröl wird über eine Kühlflüssigkeitsleitung und einem Ölkühler zu dem Verdichter zurückgeführt und dort erneut dem zu verdichtenden Gas zugemischt. Die Verwendbarkeit von Wasser wird in dieser Schrift zwar angesprochen, ein konkreter Gestaltungsvorschlag dafür jedoch nicht gemacht.

Durch die Verwendung von Öl als Kühl- und Schmiermittel wird jedoch die Umwelt belastet, da es nicht möglich ist, das Schmieröl restlos aus dem Druckgas zu entfernen. Außerdem kann eine solche Schraubenverdichteranlage nicht auf solchen Gebieten eingesetzt werden, auf denen ein vollständig ölfreies Druckgas erforderlich ist.

Aus EP-B-0 389 036, DE-A-40 42 177 und EP-B-0 258 255 ist die Verwendung von Wasser als Kühlflüssigkeit mit konkreten Beispielen bekannt. Durch die Verwendung von Wasser als Kühlflüssigkeit können störende Verunreinigungen im Druckgas vermieden werden. Wasser selbst im Druckgas ist für die meisten Anwendungsgebiete unproblematisch, insbesondere wenn das Druckgas aus der Atmosphäre angesaugte und verdichtete Luft ist.

Die Druckgaserzeugung ist im allgemeinen mit einem hohen Energieverbrauch verbunden. Aus diesem Grunde hat man versucht, über die Beeinflussung des Temperaturverlaufs im Innern des Schraubenverdichters den Energieverbrauch bei der Druckgaserzeugung zu reduzieren.

Bei dem Schraubenverdichter nach EP-B-0 389 036 erfolgt die Flüssigkeitseinspritzung direkt in das Verdichtergehäuse mit dem Ziel dadurch den Energieverbrauch bei der Druckgaserzeugung zu senken. Ein Teil des einzuspritzenden Kühlwassers wird dabei in die Saugseite des Verdichters eingespritzt, wobei aber die überwiegende Menge des Kühlwassers an in Druckrichtung verschiedenen Stellen in den Verdichtungsraum des Schraubenverdichters erfolgt.

Gemäß DE-A-40 42 177 soll die Temperatur im Arbeitsraum durch die Anordnung von Zerstäuberdüsen verringert werden, die einen feinen Sprühnebel erzeugen. Mit diesen Zerstäuberdüsen soll auch der Temperaturverlauf im Arbeitsraum vergleichmäßigt werden.

Der Energieverbrauch eines Schraubenverdichters wird wesentlich durch die Drehzahlen der Rotoren mitbestimmt. Die von den Drehzahlen abhängige Beschleunigung der Teilchen des Druckgases während der Verdichtung ist ein bedeutender Faktor für die Abbremsung der Rotoren und damit den Leistungsbedarf eines Schraubenverdichters. Außerdem hat die Drehzahl der Rotoren einen Einfluß auf die Lagerreibung und die Reibung der Rotoren aneinander. Durch niedrige Drehzahlen lassen sich die von den Drehzahlen abhängigen Verluste reduzieren. Andererseits wirken sich bei geringeren Drehzahlen Undichtigkeiten zwischen den Rotoren sowie zwischen den Rotoren und dem Verdichtergehäuse besonders negativ aus, da durch Rückströmverluste das angestrebte Druckniveau und hohe Druckgasraten nicht erzielbar sind.

Um Rückströmverluste zu minimieren, ist in EP-B-0 258 255 vorgeschlagen, durch die Einspritzung von Wasser einen Film auf den Rotoren und der Gehäuseinnenwand zu erzeugen. Dazu soll eine Wassermenge eingespritzt werden, die etwa viermal größer ist als für eine vollständige Sättigung des Druckgases erforderlich. Das Kühlwasser soll in den Ansaugkanal oder in das Verdichtergehäuse oder in beide eingespritzt werden. Während der Verdichtung erwärmt sich das zu verdichtende Gas und ein Teil des eingespritzten Wassers wird dabei verdampft. Das nicht verdampfte Wasser dichtet die Rotoren des Verdichters und das Gehäuse gegeneinander ab. Dennoch sollen die Rotoren mit Kopfkreisgeschwindigkeiten rotieren, die denen trockenlaufender Rotoren entsprechen.

Mit dem verdichteten Gas wird auch das Kühlwasser aus dem Schraubenverdichter abgeführt. Dabei wird das Gas-Kühlwassergemisch über einen Kühler einem Abscheider zugeführt, in welchen Gas und flüssiges Kühlwasser getrennt werden. Das abgeschiedene Kühlwasser wird einem drucklosen Speicher zugeleitet, von dem es mittels einer Pumpe wieder dem Schraubenverdichter zugeführt werden kann. Dabei wird jedoch nur ein Teil des eingespritzten Wassers zurückgewonnen. Wenn die Wassereinspritzung auf einen Minimalwert eingestellt wird, erfolgt überhaupt keine Wasserrückführung und der gesamte Wasserbedarf wird aus Frischwasserbeständen bereitgestellt.

US-PS-4 968 231, von der der Oberbegriff des Patentanspruchs 1 ausgeht, beschreibt eine Verdichteranlage mit einem druckgeschlossenen Kühlmittelkreislauf, in dem zur Kühlung und Schmierung eine wässrige Kaliumboratlösung zirkuliert. In dem Kühlmittelkreislauf ist hinter dem Verdichter ein Absetzbehälter angeordnet, der ein druckdicht mit dem Auslaß des Verdichters verbundener Druckbehälter ist. Die in der Verdichteranlage zirkulierende Boratlösung wird von dem in dem Druckbehälter herrschenden Druck über einen Filter und einen Kühler zu dem Verdichter gedrückt. Die in den Verdichter eingespritzte Boratlösung wird von dem verdichteten Gas erwärmt und gelangt zusammen mit dem ebenfalls warmen Druckgas zu dem Absetzbehälter. Auch die aus US-A-4 968 231 bekannte Verdichteranlage belastet die Umwelt durch eine Freisetzung von Borat und durch einen hohen Energieverbrauch.

Mit einigen bekannten Schraubenverdichtern, die eine Flüssigkeitseinspritzung in das Verdichtergehäuse aufweisen, ist im Hinblick auf den Energieverbrauch bereits ein günstiges Niveau erreicht worden. Nach wie vor ist jedoch das Versprühen der Kühlflüssigkeit mit Schwierigkeiten verbunden, da die Verdampfung von Wasser im Innern des Verdichters Mineralablagerungen verursacht, die ihrerseits weite Toleranzen und damit große Spalte und verschlechterte Wirkungsgrade hervorruft.

Der Erfindung liegt die Aufgabe zugrunde, ein umweltschonendes Verdichten gasförmiger Medien zu ermöglichen.

Die Lösung dieser Aufgabe erfolgt erfindungsgemäß mit den Merkmalen des Anspruchs 1.

Die erfindungsgemäße Verdichteranlage ist derart ausgebildet, daß in dem vom Verdichter, der Verbindungsleitung, dem Absetzbehälter und der Kühlflüssigkeitsleitung gebildeten Zirkulationsklreislauf öl- und schmiermittelfreies Kühlwasser zirkulieren kann. Durch die Verwendung von Wasser als Kühlmittel wird eine Verdichteranlage zur Verfügung gestellt, die weder Öl noch Wasseradditive in die Umwelt freisetzt. Wasser hat jedoch schlechte Dichteigenschaften. Daher sind bei dem gemäß der Erfindung vorgesehenen wassereingespritzten Verdichter viel engere Dichtspalte erforderlich als bei einem Verdichter mit Öleinspritzung. Dies hat zur Folge, daß enge Toleranzen eingehalten werden müssen. Die die Mineralablagerungen unterbindende Wasseraufbereitungsvorrichtung und die annähernd isotherme Verdichtung verhindern, daß Ablagerungen die Dichtspalte zusetzen und zu Zerstörungen führen. Durch die Vermeidung von Ablagerungen an den Lagern wird auch die Lebensdauer des Verdichters erhöht.

Bei der Erfindung sind also verschiedene Maßnahmen kombiniert worden. Zunächst wird die Umwelt dadurch geschont, daß zum Kühlen und Schmieren der Verdichteranlage weder Öl noch andere Additive verwendet werden, wobei dieser Effekt nicht durch eine Verschlechterung des Wirkungsgrades der Verdichteranlage erkauft wird. Durch die Ausgestaltung der Verdichteranlage mit einem geschlossenen Kühlwasserkreislauf und einer Mineralablagerungen unterbindenden Wasseraufbereitungsanlage sowie durch die Auslegung für annähernd isotherme Verdichtung werden nämlich innere Verluste in der Verdichteranlage minimiert. Die Wasseraufbereitungsanlage, die nur im Zusammenwirken mit dem geschlossenen Kreislauf und den niedrigen Wasserverbrauch durch das nahezu isotherme Verdichten in der Lage ist, Mineralablagerungen zu verhindern, ermöglicht enge Toleranzen bei der Rotorgestaltung. Diese engen Toleranzen bei der Rotorgestaltung verringern die Rückstromverluste und verbessern so den Wirkungsgrad, ohne daß ein besonderes Schmier- oder Dichtmittel erforderlich wäre. Die Vermeidung von Mineralablagerungen ist ein wesentlicher Aspekt, der die engen Toleranzen ermöglicht. Da die erfindungsgemäße Verdichteranlage mit einer geringen Drehzahl arbeiten kann, werden Verluste und Verschleiß minimiert. Die annähernd isotherme Verdichtung hat darüberhinaus neben dem geringen Wasserverbrauch auch den positiven Effekt, dem Rotor einen geringeren Widerstand entgegenzusetzen, da der auf eine Temperaturerhöhung zurückzuführende Widerstand in dem Verdichter reduziert wird. Unter einer annähernd isothermen Verdichtung wird eine Verdichtung verstanden, bei der die Gasauslaßtemperatur die Gaseinlaßtemperatur um weniger als 5°-10° über- oder unterschreitet. Vorzugsweise ist die Gasauslaßtemperatur kleiner oder gleich der Gaseinlaßtemperatur. Die Erfindung besteht also nicht nur in dem bloßen Weglassen von Additiven im Kühlwasser, sondern aus einem aufeinander abgestimmten System von Maßnahmen, das zu einer verringerten Umweltbelastung führt.

Die Wasseraufbereitungsvorrichtung hat darüberhinaus den Vorteil ein Verkeimen des zirkulierenden Kühlwassers zu verhindern, so daß auch eine Umweltgefährdung durch eine unkontrollierte Verbreitung von Keimen ausgeschlossen ist.

Die Verwendung von Wasser als Kühlmittel und die Aufbereitung desselben bietet auch den Vorteil, daß das erzeugte Druckgas absolut öl- und keimfrei ist, so daß die Verdichteranlage sogar im Bereich der Lebensmittelindustrie und in Reinluftlaboren verwendbar ist.

Die Verdichteranlage kann als quasi geschlossenes System betrachtet werden, das einen Betrieb mit einem geschlossenen Kreislauf erlaubt. Wenn das zu verdichtende Gas, beispielsweise Luft, mit einer Feuchtigkeitsmenge zugeführt wird, mit der auch die Druckluft die Verdichteranlage verläßt, bleibt die Kühlwassermenge konstant und der Zirkulationskreislauf kann nach außen abgeschlossen betrieben werden. Über das zu verdichtende Gas ist der Zirkulationskreislauf jedoch nach außen offen, so daß das System nur als quasi geschlossen bezeichnet werden kann. Um einen Flüssigkeitseintrag über das Gas ausgleichen zu können, kann der Zirkulationskreislauf offen ausgeführt sein, d.h. einen Ablauf aufweisen. Die Kühlwassereinspritzung ist vorzugsweise so ausgelegt, daß im Verdichter keine Verdampfung erfolgt, so daß kein Kühlwasser verbraucht wird. Zur ersten Befüllung und für Wartungszwecke kann auch eine Zuleitung vorgesehen sein.

Vorzugsweise ist die Wasseraufbereitungsvorrichtung eine Polarisationseinrichtung, die im Kühlwasser transportierte Fremdstoffe elektrisch auflädt. Fremdstoffe, z.B. gelöste Mineralien, tauschen dabei unter Einfluß des zwischen den Elektroden der Polarisationseinrichtung bestehenden elektrischen Feldes einen freien Ladungsträger aus. Aufgrund der gleichgerichteten Aufladung stoßen sich die Fremdstoffe gegenseitig ab, so daß die Bildung von Ablagerungen ermöglichenden Clustern verhindert wird. Durch die Vermeidung der Bildung von mineralischer Ablagerungen, z.B. Kalkablagerungen wird die Standzeit sämtlicher Anlagenteile, insbesondere der von Rotoren und Lagern für solche Rotoren, erhöht.

Die Wasseraufbereitungsvorrichtung der Verdichteranlage kann zwei von einer äußeren Spannung gespeiste, sich nicht verzehrende Elektroden aufweisen. Bevorzugt ist jedoch eine Verdichteranlage, bei der die Polarisationseinrichtung ein elektrochemisches Element umfaßt. Das verwendete elektrochemische Element umfaßt eine positive Elektrode und eine negative Elektrode, zwischen denen als Elektrolyt das Kühlwasser strömt. Die Fremdstoffe im Kühlwasser dienen dabei als Ladungsträger. Eine solche Wasseraufbereitungsvorrichtung hat den Vorteil, auch ohne Stromzufuhr zu funktionieren. Sie vereinfacht die Verdichteranlage und vermeidet unnötigen Stromverbrauch.

Vorzugsweise ist die Polarisationseinrichtung in einem axial durchströmten Rohr angeordnet, an dessen Innenwand eine Metallelektrode angeordnet ist, die mit einer Gegenelektrode zusammenwirkt, die im Innern des Rohres verläuft. Bei einer solchen Ausgestaltung der Wasseraufbereitungsvorrichtung wird dem strömenden Kühlwasser nur ein geringer Widerstand entgegengesetzt, so daß der für den Kühlwassertransport erforderliche Energieaufwand gering ist. Gleichzeitig gewährleistet diese Ausgestaltung eine gute Polarisierung der im Kühlwasser transportierten Fremdstoffe. Eine besonders gute Polarisierung wird erreicht, wenn die Metallelektrode aus Aluminium und die Gegenelektrode aus Kohlenstoff besteht. Bei dieser Materialpaarung ist außerdem sichergestellt, daß nur vernachlässigbar geringe Mengen des Elektrodenmaterials der sich auflösenden Elektrode in dem Kühlwasser in Lösung gehen. Besondere Vorteile ergeben sich auch dann, wenn das axial durchströmte Rohr ein Stahlrohr ist, das an seiner Innenwand eine das Stahlrohr gegenüber der Metallelektrode elektrisch isolierende Isolierung aufweist.

Mit einem der Polarisationseinrichtung nachgeschalteten Partikelfilter, der vorzugsweise ein Membranfilter ist, können aus dem Kühlwasser Verunreinigungen entfernt werden.

Die Verdichteranlage kann über ein füllstandsgesteuertes Ventil an das öffentliche Trinkwassernetz angeschlossen sein. Da die Verdichteranlage öl- und schmiermittelfrei arbeitet, kann im Falle eines Wassereintrags über das zu verdichtende Gas das überschüssige Wasser abgelassen werden. Ein solcher Wassereintrag erfolgt in besonders starkem Maße im Sommer, wenn die zu verdichtende Luft eine hohe Luftfeuchtigkeitsmenge enthält, da bei der isothermen Verdichtung der Drucktaupunkt unterschritten wird. Auch in diesem Fall kann die Anlage mit geringem Überwachungsaufwand betrieben werden, da obere Niveausensoren ein Öffnen des Abflußventils veranlassen, wenn sich zu viel Kondenswasser angesammelt hat. Wartungsaufwendige Ölabscheider zur Trennung von Öl und Kondenswasser sind bei der Verdichteranlage gemäß der Erfindung nicht erforderlich.

Weitere Vorteile ergeben sich aus den Unteransprüchen sowie aus der Zeichnung im Zusammenhang mit der Beschreibung. Nachfolgend wird die in der Zeichnung dargestellte bevorzugte Ausführungsform näher beschrieben.

Es zeigen:
- Fig. 1: eine bevorzugte Ausführungsform der Verdichteranlage mit einer in den Kühlwasserkreislauf eingeschalteten Wasseraufbereitungsvorrichtung,
- Fig. 2: die Wasseraufbereitungsvorrichtung in Fig. 1 in vergrößerter Darstellung,
- Fig. 3: einen Schraubenverdichter zur Verwendung in der Verdichteranlage in Fig. 1 in schematischer Darstellung in einem Längsschnitt, und
- Fig. 4: ein Rotorpaar des Schraubenverdichtes in Fig. 3 in schematischer Darstellung in einem Schnitt quer zu den Rotorachsen.

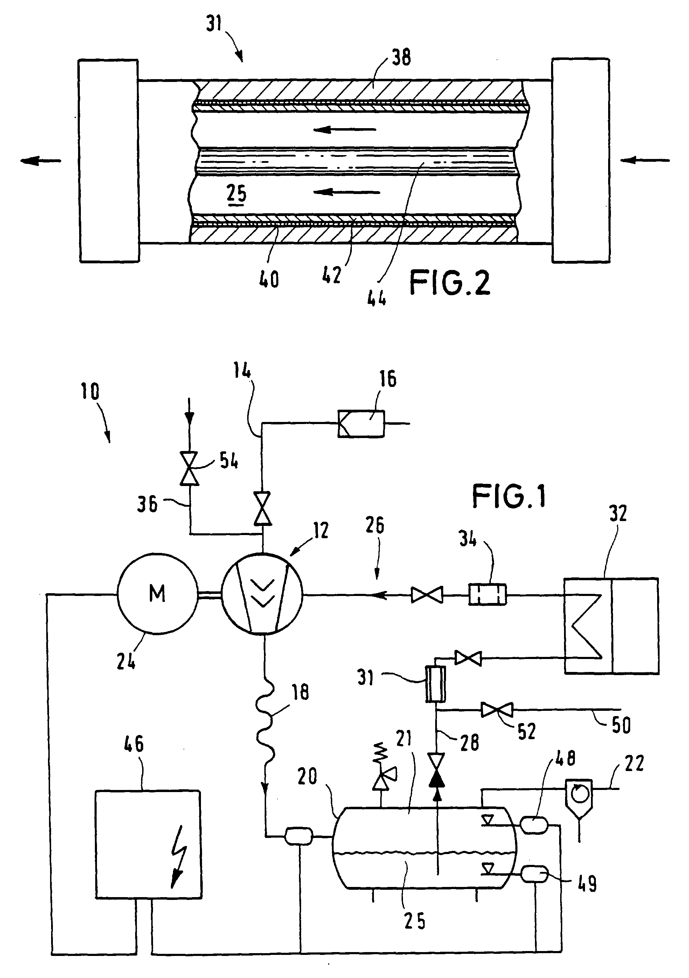

Fig. 1 zeigt eine Verdichteranlage 10 zur Erzeugung ölfreier Druckluft. Die Verdichteranlage 10 weist einen Verdichter 12 auf, dessen Saugseite über einen Gasansaugkanal 14 mit einem Luftfilter 16 verbunden ist. Die in dem Verdichter 12 komprimierte Luft wird über eine Verbindungsleitung 18 in einen Absetzbehälter 20 geleitet, der gleichzeitig für die Druckluft 21 als Druckgasbehälter fungiert. Die Druckluft kann dem System über eine Druckluftleitung 22 entnommen werden.

Der Verdichter 12, der von einem Elektromotor 24 angetrieben wird, ist ein Schraubenverdichter mit einem Hauptläufer und einem Nebenläufer aus keramischem Werkstoff. Der Hauptläuferrotor weist fünf bikonvexe Zähne auf, die schraubenförmig um die Achse des Hauptläuferrotors gewunden sind und im Druckteil des Verdichters 12 einen Umschlingungswinkel von etwa 240° aufweisen. Der Nebenläuferrotor weist sechs konvex-konkave Zähne auf, die um die Achse des Nebenläuferrotors verschraubt sind. Beim Kämmen der Rotore wälzen sich die Zähne des Haupt- und Nebenläuferrotors aneinander ab.

Die beiden Rotore des Rotorpaares sind jeweils beidseitig gelagert. Der Hauptläuferrotor, der den Nebenläuferrotor kämmend antreibt, wird seinerseits über eine Antriebswelle angetrieben.

Beide Rotore des in dem Schraubenverdichter 12 verwendeten Rotorpaares sind gegossene Keramik oder Kunststoffrotore, die eine sehr glatte Oberfläche und enge Toleranzen aufweisen. Diese engen Toleranzen werden durch Feinbearbeitung, z.B. durch Läppen und Lacken erreicht.

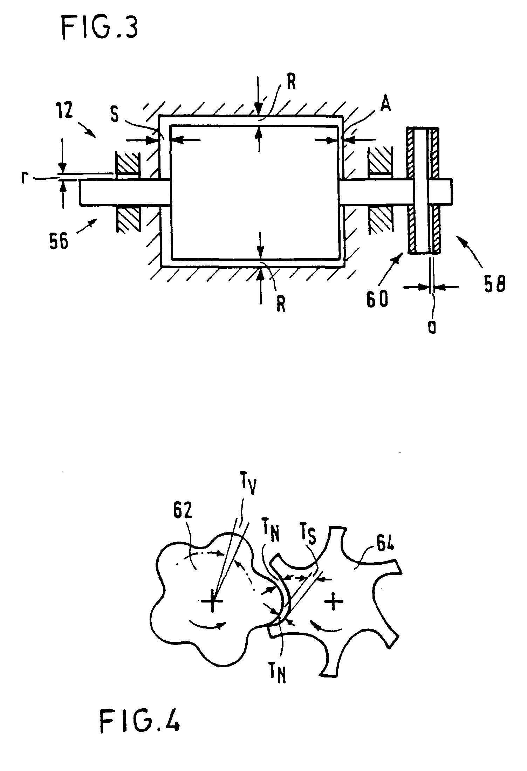

Die nachfolgende Tabelle 1 zeigt zusammen mit den Figuren 3 und 4 Toleranzen, mit denen ein guter Wirkungsgrad erzielbar ist, wobei in den Figuren 3 und 4 folgende Bezeichnungen verwendet werden:
- S: Saugseitenspiel
- A: Druckseitenspiel
- R: Zylinderspiel
- r: Radial-Lagerluft
- a: Axial-Lagerluft
- Ts: Überkopfspiel im Stirnschnitt
- Tv: Verdrehflankenspiel senkrecht zur Rotorenachse im Teilkreisbereich
- Tn: Normalspiel senkrecht zur Profilflanke im Teilkreisbereich

Der in Figur 3 schematisch gezeigte Schraubenverdichter 12, dessen Saugseite 56 in der Figur 3 links eingezeichnet ist und dessen Druckseite 58 am Drucklager 60 zu erkennen ist, weist je nach Baureihe in Abhängigkeit vom Rotordurchmesser folgende Toleranzen auf:

**Tabelle 1**

| Rotordurchmesser des ?-Rotors | 72 mm | 200 mm | 400 mm |
|---|---|---|---|
| S Saugseitenspiel | 20-25 (23-33) | 30-35 (37-47) | 35-40 (55-73) |
| A Druckseitenspiel | 0 (2 ±1) | 0 (3 ±1) | 0 (5 ±1) |
| R Zylinderspiel | 0-2 (4-6) | 2-4 (7-11) | 2-4 (12-15) |
| Ts Überkopfspiel | 0-1 (1-2) | 1-2 (2-3) | 2-3 (3-6) |
| Tv Verdrehflankenspiel | 0-1 (2-4) | 0-1 (3-5) | 0-1 (4-6) |
| Tn Normalspiel | 0-1 (1-2) | 0-1 (2-4) | 0-1 (3-5) |
| r Radial-Lagerluft | 0 (1-2) | 0 (3-4) | 0 (4-5) |
| a Axial-Lagerlufuft | 0 (1-2) | 0 (6-11) | 0 (9-14) |

Die Toleranzangaben in der Tabelle in in 1/100 mm, wobei Ts,Tv und Tn Werte bei Nullachsabstand sind. Zum Vergleich sind die Toleranzen bei einem Verdichter gemäß dem Stand der Technik in Klammern angegeben. Das Überkopfspiel Ts, das Verdrehflankenspiel Tv und das Normalspiel Tn sind in Figur 4 gezeigt, wobei der Hauptläuferrotor 62 den Nebenläuferrotor 64 kämmend antreibt.

Die Rotore sind vorzugsweise nach dem in DE-A-39 03 067 oder dem in DE-A-40 35 534 beschriebenen Verfahren gefertigt.

Um eine Verdichtung zu ermöglichen, bei der die Gasauslaßtemperatur gleich oder kleiner ist als die Gaseinlaßtemperatur weist die Verdichteranlage 10 einen Zirkulations- oder Kühlkreislauf 26 auf, in dem als Kühlmittel öl- und schmiermittelfreies Kühlwasser 25 zirkuliert. Die Verdichtung erfolgt also wie in einem polytropen Prozeß mit einem Polytropenexponent zwischen 0,95 und 1,05, vorzugsweise zwischen 0,95 und 1,0. Das Kühlwasser 25 wird während der Verdichtung im Bereich der Rotore des Schraubenverdichters über Wassereinspritzdüsen eingespritzt und nimmt in dem Verdichter 12 während der Verdichtung die entstehende Wärme auf. Die Einspritzdüsen, die vorzugsweise gemäß DE-AS-40 42 177 ausgebildet sind, spritzen sowohl in die Ansaugseite als auch in die Druckseite des Verdichters ein. Die Einspritzung erfolgt so, daß sichergestellt wird, daß im Verdichter an keiner Stelle eine Verdunstung erfolgt. Mit einer nicht gezeigten Kühlwasserverteilungsvorrichtung kann das Verhältnis des in den Saugkanal eingespritzten Kühlwassers zu dem durch das Verdichtergehäuse eingespritzten Kühlwasser eingestellt werden.

Dadurch kann auch bei wechselnden Betriebsbedingungen eine 100 % Sättigung der in den Verdichter eintretenden Luft erreicht werden. Eine frühe Vernebelung, die zu feinsten Wassertröpfchen führt, und die gestreckte Einspritzung mit einer im Innern des Verdichters flachen Temperaturkurve zeigen dann zusammen mit den engen Toleranzen einen besonders guten Wirkungsgrad.

In dem Absetzbehälter 20 schlägt sich das Kühl- und Kondenswasser 25 nahezu vollständig nieder. Aufgrund des in dem Absetzbehälter 20 herrschenden Drucks wird das Kühlwasser über eine Kühlflüssigkeitsleitung 28 zu einer Mineralablagerungen unterbindenden Wasseraufbereitungsvorrichtung 31 gedrückt, die vorzugsweise eine Polarisationseinrichtung ist. Von der Wasseraufbereitungsvorrichtung 31 wird das Wasser zu einem Kühler 32 und einem Partikelfilter 34 gedrückt und von dort aufbereitet und gekühlt zu den Wassereinspritzdüsen des Verdichters 12 geleitet.

Die Verdichteranlage kann über einen Leitungswassereinlaß 36 mit Leitungswasser gefüllt werden, wobei das Leitungswasser der in dem Gasansaugkanal 14 angesaugten Luft zugesetzt wird. Das Leitungswasser gelangt über den Verdichter 12, die Verbindungsleitung 18 und den Absetzbehälter 20 zu der Wasseraufbereitungsvorrichtung 31, die im Verlauf der Kühlmittelleitung 28 angeordnet ist.

Die als Wasseraufbereitungsvorrichtung 31 vorgesehene und in Fig. 2 in vergrößerter Darstellung gezeigte Polarisationseinrichtung umfaßt als Aufbereitungsgefäß ein axial durchströmtes Stahlrohr 38. Das Stahlrohr 38 ist an seiner Innenseite mit einer aus Kunststoff bestehenden Isolierung 40 ausgekleidet, die das Stahlrohr 38 gegenüber einer aus Aluminium bestehenden Metallelektrode 42 isoliert. Als Gegenelektrode 44 ist im Innern des zylindrischen Stahlrohrs 38 eine stabförmige Kohlenstoffelektrode angeordnet. Die Gegenelektrode 44, deren Achse mit der Achse des Stahlrohrs 38 zusammenfällt, hat die gleiche Länge wie die Metallelektrode 42 und ist mit dieser nur über das durch das Stahlrohr strömende Kühlwasser 25 elektrisch verbunden.

Bei der Aufbereitung des Kühlwassers 25 wird die zwischen der Metallelektrode 42 und der Gegenelektrode 44 sich einstellende Elementspannung genutzt. Solange durch das Stahlrohr 38 mineralhaltiges Wasser 25 als Elektrolyt geführt wird, bilden die Metallelektrode 42, die Gegenelektrode 44 und das mineralhaltige Kühlwasser 25 ein galvanisches Element. Die Spannung zwischen der Metallelektrode 42 und der Gegenelektrode 44 liegt je nach der Beschaffenheit des Kühlwassers 25 und der Elektroden 42,44 zwischen 0,8 und 1,2 V.

Mit der Polarisationseinrichtung 31, die auch als Ionenlader bezeichnet werden kann, werden Ausfällungen und Inkrustationen von Silicium, Calcium und Magnesium verhindert oder wieder abgebaut. Die im Innern des Ionenladers aufgrund der Elementspannung zwischen den beiden Elektroden 42,44 erzielte Ionisation überführt die im Wasser gelösten natürlichen Mineralien, z.B. Calcium, Magnesium, Silicium und Eisen, fast vollständig in die Hydroxydformen (z.B. Ca(OH)₂, Mg(OH)₂, Si(OH)₂, Fe(OH)₂). Nach dieser Umformung nehmen die gebildeten Hydroxydteilchen eine elektrische Ladung an. Durch diesen Zustand, bei dem jedes Teilchen die gleiche Ladung mit gleicher Polarität hat, wird verhindert, daß die Teilchen zusammenbacken. Dies beruht darauf, daß sich gleiche elektrische Ladungen abstoßen.

Da die ionisierten Mineralteilchen ihren Ladungszustand nur für eine beschränkte Zeit beibehalten, ist es erforderlich, die Ionisation des Kühlwassers 25 stetig zu wiederholen. Bei der bevorzugten Ausführungsform wird das Kühlwasser 25 etwa sechsmal pro Minute durch die Wasseraufbereitungsvorrichtung 30 geleitet. Wegen der wiederholten Bearbeitung des Kühlwassers 25 in der Wasseraufbereitungsvorrichtung 30, die aufgrund der Kühlwasserrückführung möglich ist, kann trotz des vergleichsweise schwachen elektrischen Feldes eine ausreichende elektrische Aufladung von Fremdstoffen und damit Enthärtung des Kühlwassers 25 erfolgen.

Für die Funktionsfähigkeit der Wasseraufbereitungsvorrichtung 31 ist es wichtig, daß die Aluminiumelektrode nur über das Kühlwasser 25 mit der Kohlenstoffelektrode 44 verbunden ist, so daß zwischen den Elektroden 42,44 außer dem Ladungstransport über das Elektrolyt kein Strom fließt. Wären die beiden Elektroden 42,44 elektrisch verbunden, könnte Aluminium in großer Menge freigesetzt werden, mit der negativen Folge, daß das im Kühlwasser 25 gelöste Silizium ausfallen würden und an Wellen, Gehäusen und Gleitringdichtungen hartnäckige Ablagerungen bilden würde.

Der der Polarisationseinrichtung 31 nachgeschaltete Partikelfilter 34 dient dazu, dem Kühlwasser 25 dauerhaft Fremdstoffe zu entziehen. Da sich die Membran des Partikelfilters 34 zusetzen kann, ist der Partikelfilter 34 regelmäßig zu ersetzen.

Um einen wartungsarmen Betrieb der Verdichteranlage 10 zu gewährleisten, ist eine elektrische Steuerung vorgesehen, die eine Zentraleinheit 46 und obere und untere Niveausensoren 48,49 aufweist. Die Niveausensoren 48,49 dienen dazu, den Kühlwasserstand in dem Absetzbehälter 20 zu überwachen. Je nach Temperatur und Feuchtigkeitsgehalt der angesaugten Luft wird nämlich dem Kühlkreislauf 26 mehr oder weniger Kondenswasser zugeführt.

Wenn die zu verdichtende Luft warm ist und eine große Menge Feuchtigkeit enthält, bewirkt die Verdichtung, daß besonders viel Kondenswasser entsteht. Dieses wird aus dem Kühlkreislauf 26 automatisch über eine Abflußleitung 50 abgeleitet. Dazu wird von der Zentraleinheit 46 ein Ablaufventil 52 automatisch geöffnet, wenn das Kühlwasser 25 in dem Absetzbehälter 20 den maximal erlaubten Wasserstand erreicht, was von dem oberen Niveausensor 48 nachgewiesen wird. Bei Erreichen des unteren Niveausensors 49 schließt das Ablaufventil 52.

## Patentansprüche

1. Verdichteranlage mit einem wassereinspritzgekühlten Verdichter (12), dessen Druckauslaß durch eine Verbindungsleitung (18) mit einem Absetzbehälter (20) zum Abscheiden des eingespritzten Kühlwassers (25) verbunden ist, wobei der Absetzbehälter (20) ein druckdicht mit dem Auslaß des Verdichters (12) verbundener Druckbehälter ist, mit einer von dem Absetzbehälter (20) zu dem Verdichter (12) führenden Kühlwasserleitung (28), und mit einem Kühler (32), der im Fließweg des Kühlwassers (25) zwischen Absetzbehälter (20) und Verdichter (12) angeordnet ist, wobei ölfreies Kühlwasser (25) in dem vom Verdichter (12), der Verbindungsleitung (18), dem Absetzbehälter (20), dem Kühler (32) und der Kühlwasserleitung (28) gebildeten Zirkulationskreislauf (26) zirkuliert, das aufgrund des in dem Absetzbehälter (20) herrschenden Drucks zu dem Kühler (32) gedrückt wird,
**dadurch gekennzeichnet,**
**daß** das in dem Zirkulationskreislauf enthaltene Kühlwasser frei von Additiven ist,
**daß** in dem Zirkulationskreislauf (26) eine Mineralablagerungen unterbindende Wasseraufbereitungsvorrichtung (31) angeordnet ist, und
**daß** die Einspritzung in den Verdichter (12) derart bemessen ist, daß der Verdichter (12) eine annähernd isotherme Verdichtung ausführt, bei der die Gasauslaßtemperatur die Gaseinlaßtemperatur um weniger als 10 K über- oder unterschreitet.

2. Verdichteranlage nach Anspruch 1, **dadurch gekennzeichnet, daß** die Wasseraufbereitungsvorrichtung (31) eine Polarisationseinrichtung zur elektrischen Aufladung im Kühlwasser (25) transportierter Fremdstoffe ist.

3. Verdichteranlage nach Anspruch 2, **dadurch gekennzeichnet, daß** die Polarisationseinrichtung (31) ein elektrochemisches Element aufweist, das eine positive Elektrode und eine negative Elektrode umfaßt, zwischen denen als Elektrolyt das Kühlwasser (25) strömt.

4. Verdichteranlage nach Anspruch 3, **dadurch gekennzeichnet, daß** die Polarisationseinrichtung in einem axial durchströmten Rohr (38) angeordnet ist, an dessen Innenwand eine Metallelektrode (42) angeordnet ist, die mit einer Gegenelektrode (44) zusammenwirkt, die im Innern des Rohrs (38) verläuft.

5. Verdichteranlage nach Anspruch 4, **dadurch gekennzeichnet, daß** die Metallelektrode (42) rohrförmig ist, daß die Gegenelektrode (44) stabförmig ist, daß beide die gleiche Länge aufweisen und daß beide nur über den Elektrolyten elektrisch verbunden sind.

6. Verdichteranlage nach einem der Ansprüche 1-5, **dadurch gekennzeichnet, daß** die Wasseraufbereitungsvorrichtung (31) einen Partikelfilter (34) umfaßt, der der Polarisationseinrichtung nachgeschaltet ist.

7. Verdichteranlage nach einem der Ansprüche 1-6, **dadurch gekennzeichnet, daß** der Kühler (32) derart ausgelegt ist, daß das Kühlwasser (25) dem Verdichter (12) in so großer Menge und mit so niedriger Temperatur zugeführt wird, daß die Gasauslaßtemperatur kleiner oder gleich der Gaseinlaßtemperatur ist.

8. Verdichteranlage nach einem der Ansprüche 1-7, **dadurch gekennzeichnet, daß** im Luftansaugkanal des Verdichters (12) eine Einspritzvorrichtung vorgesehen ist, durch die Kühlwasser (25) in solcher Menge einspritzbar ist, daß die angesaugte Luft beim Eintritt in den Verdichter (12) vollständig gesättigt ist.

9. Verdichteranlage nach einem der Ansprüche 1-8, **dadurch gekennzeichnet, daß** in dem Verdichtergehäuse Einspritzdüsen angeordnet sind, durch die Kühlwasser (25) in den Saugteil und in den Kompressionsteil des Verdichters (12) eingespritzt wird.

10. Verdichteranlage nach Anspruch 8 oder 9, **dadurch gekennzeichnet, daß** eine Kühlwasserverteilungsvorrichtung vorgesehen ist, mit der das Verhältnis des in den Luftansaugkanal eingespritzten Kühlwassers zu dem durch das Verdichtergehäuse eingespritzten Kühlwasser einstellbar ist.

## Claims

1. A compressor installation comprising a water-injection cooled compressor (12) having its pressure outlet connected by a connection duct (18) to a precipitation or settling vessel (20) for separating the injected cooling water (25), the settling vessel (20) being a pressure container connected to the outlet of the compressor (12) in a pressure-tight manner, the compressor installation further comprising a cooling water conduit (28) leading from the settling vessel (20) to the compressor (12), and a cooling means (32) arranged in the flow path of the cooling water (25) between the settling vessel (20) and the compressor (12), oil-free cooling water (25) circulating in the circulation circuit (26) formed by the compressor (12), the connection duct (18), the settling vessel (20), the cooling means (32) and the cooling water conduit (28), the water being urged towards the cooling means (32) by the pressure prevailing in the settling vessel (20),
**characterized in**
**that** the cooling water contained in the circulation circuit is free of additives,
**that** a water treatment device (31) for preventing mineral deposits is arranged in the circulation circuit (26), and
**that** the injection into the compressor (12) is dosed such that the compressor (12) effects an almost isothermal compression, wherein the gas outlet temperature is higher or lower than the gas inlet temperature by less than 10 K.

2. The compressor installation of claim 1, **characterized in that** the water treatment device (31) is a polarization means for electrically charging foreign matter transported in the cooling water (25).

3. The compressor installation of claim 2, **characterized in that** said polarization means (31) comprises an electro-chemical element having a positive and a negative electrode between which the cooling water (25) flows as the electrolyte.

4. The compressor installation of claim 3, **characterized in that** said polarization means is arranged in a pipe (38) that is flown through axially and has its inner wall provided with a metal electrode (42) cooperating with a counter electrode (44) extending inside the pipe (38).

5. The compressor installation of claim 4, **characterized in that** the metal electrode (42) is tubular, the counter electrode (44) is rod shaped, both have the same length and that both are connected only through the electrolyte.

6. The compressor means of one of claims 1-5, **characterized in that** the water treatment device (31) comprises a particulate filter (34) that is arranged downstream of the polarization means.

7. The compressor installation of one of claims 1-6, **characterized in that** the cooling means (32) is designed such that the cooling water (25) is fed to the compressor (12) in such quantities and with a temperature low enough for the gas outlet temperature being less than or equal to the gas inlet temperature.

8. The compressor installation of one of claim 1-7, **characterized in that** an injection means is provided in the air take-in duct of the compressor (12), through which means cooling water (25) may be injected in such quantities that the air taken in is entirely saturated upon entering the compressor (12).

9. The compressor installation of one of claims 1-8, **characterized in that** injection nozzles are arranged in the compressor housing through which cooling water (25) is injected into the take-in portion and the compression portion of the compressor (12).

10. The compressor installation of claim 8 or 9, **characterized in that** a cooling water distributing device is provided by which the ratio of the cooling water injected into the air take-in duct to the cooling water injected through the compressor housing may be adjusted.

## Revendications

1. Installation de compresseur comprenant un compresseur (12) refroidi par injection d'eau, dont la sortie sous pression est reliée par une conduite de liaison (18) à un récipient de décantation (20) pour la séparation de l'eau de refroidissement (25) injectée, le récipient de décantation (20) étant un récipient sous pression relié de façon étanche à la pression à la sortie du compresseur (12), une conduite d'eau de refroidissement (28) allant du récipient de décantation (20) au compresseur (12), et un refroidisseur (32), qui est disposé dans le trajet d'écoulement de l'eau de refroidissement (25) entre récipient de décantation (20) et compresseur (12), de l'eau de refroidissement (25) sans huile circulant dans le cycle de circulation (26) formé par le compresseur (12), la conduite de liaison (18), le récipient de décantation (20), le refroidisseur (32) et la conduite d'eau de refroidissement (28), laquelle eau est refoulée vers le refroidisseur (32) en raison de la pression qui règne dans le récipient de décantation (20), **caractérisée**
**en ce que** l'eau de refroidissement contenue dans le cycle de circulation est exempte d'additifs,
**en ce qu'**un dispositif de traitement d'eau (31) supprimant des dépôts minéraux est disposé dans le cycle de circulation (26),
**en ce que** l'injection dans le compresseur (12) est dimensionnée de telle façon que le compresseur (12) exécute une compression approximativement isotherme, lors de laquelle la température de la sortie du gaz est supérieure ou inférieure de moins de 10 K à la température de l'entrée du gaz.

2. Installation de compresseur selon la revendication 1, **caractérisée en ce que** le dispositif de traitement d'eau (31) est un appareil de polarisation pour le chargement électrique de substances étrangères transportées dans l'eau de refroidissement (25).

3. Installation de compresseur selon la revendication 2, **caractérisée en ce que** l'appareil de polarisation (31) présente un élément électrochimique qui inclut une électrode positive et une électrode négative, entre lesquelles l'eau de refroidissement (25) circule comme électrolyte

4. Installation de compresseur selon la revendication 3, **caractérisée en ce que** l'appareil de polarisation est disposé dans un tuyau (38) traversé axialement, sur la paroi interne duquel est disposée une électrode en métal (42), qui agit conjointement avec une contre-électrode (44) qui s'étend à l'intérieur du tuyau (38).

5. Installation de compresseur selon la revendication 4, **caractérisée en ce que** l'électrode en métal (42) a une forme tubulaire, **en ce que** la contre-électrode a une forme de barre, **en ce que** toutes les deux ont la même longueur et **en ce que** toutes les deux ne sont reliées électriquement que par l'électrolyte.

6. Installation de compresseur selon l'une quelconque des revendications 1 à 5, **caractérisée en ce que** le dispositif de traitement d'eau (31) inclut un filtre à particules (34), qui est placé en aval de l'appareil de polarisation.

7. Installation de compresseur selon l'une quelconque des revendications 1 à 6, **caractérisée en ce que** le refroidisseur (32) est conçu de telle façon que l'eau de refroidissement (25) est amenée au compresseur (12) dans une quantité si grande et avec une température si faible que la température de sortie du gaz est inférieure ou égale à la température d'entrée du gaz.

8. Installation de compresseur selon l'une quelconque des revendications 1 à 7, **caractérisée en ce qu'**il est prévu dans le canal d'aspiration d'air du compresseur (12) un dispositif d'injection par lequel de l'eau de refroidissement (25) peut être injectée dans une telle quantité que l'air aspiré est complètement saturé lors de l'entrée dans le compresseur (12).

9. Installation de compresseur selon l'une quelconque des revendications 1 à 8, **caractérisée en ce que** dans le carter du compresseur sont disposés des buses d'injection par lesquelles de l'eau de refroidissement (25) est injectée dans la partie d'aspiration et dans la partie de compression du compresseur (12).

10. Installation de compresseur selon la revendication 8 ou 9, **caractérisée en ce qu'**il est prévu un dispositif de répartition d'eau de refroidissement qui permet de régler le rapport entre l'eau de refroidissement injectée dans le canal d'aspiration d'air et l'eau de refroidissement injectée à travers le carter du compresseur.
